# FASCICULE DE BREVET EUROPEEN

(11) **EP 3 550 204 B1**
(45) Date de publication et mention de la délivrance du brevet: **17.05.2023**
(21) Numéro de dépôt: 19167065.2
(22) Date de dépôt: 03.04.2019
(51) Int. Cl.: F21S 41/143, F21S 41/153, F21S 41/255, F21S 41/663, F21S 41/24, F21S 41/32, F21W 102/19, F21W 103/60

(54) **DISPOSITIF LUMINEUX POUR UN VEHICULE AUTOMOBILE REALISANT UNE FONCTION D'ECRITURE AU SOL**
LEUCHTVORRICHTUNG FÜR KRAFTFAHRZEUG, DIE EINE SCHREIBFUNKTION AUF DEM BODEN AUSFÜHRT
LIGHT DEVICE FOR A MOTOR VEHICLE WITH ROAD WRITING FUNCTION

(30) Priorité: 03.04.2018 FR 1852898
(43) Date de publication de la demande: 09.10.2019
(73) Titulaire: Valeo Vision, 93012 Bobigny Cedex (FR)
(72) Inventeur: ROELS, Sebastien, 93012 BOBIGNY Cedex (FR); PELLARIN, Marie, 93012 BOBIGNY Cedex (FR); CLADE, Sophie, 93012 BOBIGNY Cedex (FR)
(74) Mandataire: Valeo Visibility

(56) Documents cités:
- EP-A1- 3 216 650
- EP-A1- 3 248 838
- EP-A1- 3 531 010
- FR-A1- 3 055 947
- FR-A1- 3 056 680
- JP-A- 2014 189 198
- JP-A- 2017 212 169
- US-A1- 2011 235 349
- US-A1- 2015 377 442
- US-A1- 2018 010 755

## Description

L'invention a trait au domaine de l'éclairage et/ou de la signalisation lumineuse, notamment pour véhicule automobile. Plus particulièrement, l'invention concerne un dispositif lumineux pour véhicule automobile capable de projeter un faisceau lumineux pixélisé afin de projeter des informations sur la route à destination du conducteur du véhicule.

Afin que les informations que ce dispositif projette sur la route soient perceptibles de façon claire pour le conducteur, il est nécessaire que le faisceau lumineux pixélisé présente une résolution particulièrement élevée.

Les documents FR 3 056 680 A1 et EP 3 248 838 A1 divulguent un système lumineux qui est conçu pour projeter une tel faisceau lumineux pixélisé à haute résolution.

Pour autant, les technologies nécessaires pour parvenir à de telles résolutions sont coûteuses, en particulier lorsqu'on souhaite obtenir un faisceau lumineux large, ce qui est obligatoire dans le cas d'un faisceau de type croisement. Afin de réduire le prix du dispositif lumineux, il a ainsi été proposé, par exemple dans le document de brevet EP 2 772 682, de diviser le faisceau de type croisement en un faisceau de base auquel on vient superposer un faisceau pixélisé de taille réduite. De la sorte, le faisceau global présente une amplitude horizontale acceptable pour un faisceau de type croisement et une zone pixélisé que l'on peut utiliser pour la projection de motif dans ce faisceau global, par contraste entre cette zone pixélisée et le faisceau de base.

Si cette solution permet effectivement d'optimiser le coût du dispositif lumineux, elle pose toutefois un problème lorsqu'on souhaite mettre en oeuvre une fonction d'éclairage dynamique des virages. Cette fonction consiste à modifier les caractéristiques lumineuses du faisceau de type croisement lorsque le véhicule aborde un virage pour améliorer la visibilité du conducteur dans le virage sans éblouir les autres usagers de la route. On vient par exemple augmenter l'amplitude horizontale du faisceau de type croisement dans la direction du virage ou déplacer le maximum d'intensité du faisceau de type croisement dans la direction du virage.

Or, dans ce cas, du fait de la modification des caractéristiques lumineuses du faisceau de base, il est possible que le contraste entre la zone pixélisée et le faisceau de base ne soit plus suffisant pour permettre au conducteur de percevoir le motif projeté dans le faisceau global ou encore que ce contraste change de façon brusque, provoquant une modification soudaine du motif qui peut perturber le conducteur.

L'invention a pour objectif de pallier à ce problème et plus précisément de proposer une solution permettant de projeter un motif dans un faisceau de type croisement, ce motif restant perceptible sans modification brusque lors de la mise en oeuvre d'une fonction d'éclairage dynamique de virage.

A cet effet, l'invention propose un dispositif lumineux pour un véhicule automobile selon la revendication 1.

Grâce à l'invention, le motif est déplacé de façon simultanée avec le déplacement des caractéristiques du faisceau global, de sorte à ce que le contraste entre les premier et deuxième faisceaux lumineux permettant de générer ce motif reste constant lorsque la fonction d'éclairage dynamique de virage est mise en oeuvre. On garantit ainsi la perceptibilité du motif, sans variation brusque du contraste.

Avantageusement, les premier et deuxième modules lumineux sont agencés pour que :
- le premier faisceau pixélisé présente un nombre de pixels supérieur au nombre de pixels du deuxième faisceau de type croisement pixélisé ; et/ou
- chaque pixel du premier faisceau pixélisé présente une largeur et/ou une longueur strictement inférieure respectivement à la largeur minimale et/ou la longueur minimale des pixels du deuxième faisceau de type croisement pixélisé ;
- le premier faisceau pixélisé présente une amplitude horizontale inférieure à l'amplitude horizontale du deuxième faisceau de type croisement pixélisé.

On entend par largeur, et respectivement longueur de pixel, la largeur, et respectivement longueur, de ce pixel lorsqu'il est projeté sur la route ou sur un écran, par exemple disposé à 25 mètres du dispositif lumineux. Ces dimensions, mesurées en degrés, correspondent aux ouvertures angulaires des faisceaux élémentaires activables sélectivement qui composent les premier et deuxième faisceaux pixélisés.

La résolution des premier et deuxième faisceaux pixélisés peut ainsi être estimée par le nombre et les dimensions des pixels composant ces faisceaux par rapport aux amplitudes de ces faisceaux.

Selon un mode de réalisation, le premier module lumineux peut être agencé pour que le premier faisceau pixélisé présente au moins 400 pixels, voire au moins 1000 pixels, voire au moins 2000 pixels. Ce premier faisceau pixélisé peut par exemple comporter 20 colonnes et 20 lignes de pixels, notamment 32 colonnes et 32 lignes de pixels.

Avantageusement, le premier module peut être agencé pour que chaque pixel du premier faisceau pixélisé présente une largeur et/ou une longueur inférieure à 1° notamment inférieure à 0,5°, voire inférieure à 0,3°.

Avantageusement encore, le premier module lumineux peut être agencé pour que le premier faisceau pixélisé présente une amplitude verticale d'au moins 5°, notamment d'au moins 9°, et une amplitude horizontale d'au moins 5°, notamment d'au moins 12°.

Le premier module peut par exemple comporter :
- une source lumineuse pixélisée comportant une pluralité d'émetteurs élémentaires agencés en matrice, chacun des émetteurs élémentaires étant activable sélectivement pour émettre un faisceau lumineux élémentaire ; et
- un élément optique de projection associé à ladite source lumineuse pixélisée pour projeter chacun desdits faisceaux lumineux élémentaires sous la forme d'un pixel, l'ensemble des pixels formant ledit faisceau pixélisé.

Avantageusement, l'élément optique de projection est agencée de sorte à ce que le faisceau pixélisé présente une amplitude verticale d'au moins 5° et une amplitude horizontale d'au moins 5°. Ces amplitudes horizontale et verticale permettent d'assurer que le faisceau pixélisé soit projeté sur une zone de la route suffisamment vaste pour réaliser des fonctions d'écritures sur route par projection d'un motif dans ce faisceau pixélisé, et notamment des fonctions d'affichage de marquage au sol, d'assistance à la conduite et de projection d'informations GPS, ou encore des fonctions d'éclairage adaptatifs nécessitant une pixellisation du faisceau d'éclairage et notamment des fonctions d'éclairage de type feu de route non éblouissant ou de type éclairage dynamique en virage. L'élément optique de projection peut ainsi comprendre l'un ou une combinaison de plusieurs des composants optiques suivants : lentille, réflecteur, guide, collimateur, prisme.

Le cas échéant, la source lumineuse pixélisée peut comporter au moins 20 colonnes et au moins 20 lignes d'émetteurs élémentaires, notamment au moins 32 lignes et colonnes d'émetteurs élémentaires. Ces nombres de colonnes et de lignes minimales d'émetteurs élémentaires, en combinaison avec les amplitudes verticale et horizontale précédemment mentionnées permettent d'obtenir, pour chacun des faisceaux lumineux élémentaires, une fois projeté par l'élément optique de projection, une ouverture angulaire inférieure à 0,5°, voire inférieure à 0,3°. De la sorte, on obtient une résolution minimale du faisceau pixélisé lorsqu'il est projeté sur la route telle qu'on garantie une perception satisfaisante dudit motif projeté dans le faisceau pixélisé par un usager de la route et/ou par le conducteur du véhicule ainsi équipé.

Avantageusement, les émetteurs élémentaires et l'élément optique de projection sont agencés de sorte à ce que deux pixels voisins, c'est-à-dire deux pixels adjacents sur une même ligne ou sur une même colonne, soient contigus, c'est-à-dire que leurs bords adjacents soient confondus.

Dans un mode de réalisation de l'invention, la source lumineuse pixélisée du premier module comprend au moins une matrice d'éléments électroluminescents (appelée en anglais monolithic array) agencés selon au moins deux colonnes par au moins deux lignes. De préférence, la source électroluminescente comprend au moins une matrice de matrice d'éléments électroluminescents monolithique, aussi appelée matrice monolithique.

Dans une matrice monolithique, les éléments électroluminescents sont crûs depuis un substrat commun et sont connectés électriquement de manière à être activables sélectivement, individuellement ou par sous-ensemble d'éléments électroluminescents. Ainsi chaque élément électroluminescent ou groupe d'éléments électroluminescents peut former l'un des émetteurs élémentaires de ladite source lumineuse pixélisée qui peut émettre de la lumière lorsque son ou leur matériau est alimenté en électricité

Différents agencements d'éléments électroluminescents peuvent répondre à cette définition de matrice monolithique, dès lors que les éléments électroluminescents présentent l'une de leurs dimensions principales d'allongement sensiblement perpendiculaire à un substrat commun et que l'écartement entre les émetteurs élémentaires, formés par un ou plusieurs éléments électroluminescents regroupés ensemble électriquement, est faible en comparaison des écartements imposés dans des agencements connus de chips carrés plates soudés sur une carte de circuits imprimés.

Le substrat peut être majoritairement en matériau semi-conducteur. Le substrat peut comporter un ou plusieurs autres matériaux, par exemple non semi-conducteurs.

Ces éléments électroluminescents, de dimensions submillimétriques, sont par exemple agencés en saillie du substrat de manière à former des bâtonnets de section hexagonale. Les bâtonnets électroluminescents prennent naissance sur une première face d'un substrat. Chaque bâtonnet électroluminescent, ici formé par utilisation de nitrure de gallium (GaN), s'étend perpendiculairement, ou sensiblement perpendiculairement, en saillie du substrat, ici réalisé à base de silicium, d'autres matériaux comme du carbure de silicium pouvant être utilisés sans sortir du contexte de l'invention. A titre d'exemple, les bâtonnets électroluminescents pourraient être réalisés à partir d'un alliage de nitrure d'aluminium et de nitrure de gallium (AIGaN), ou à partir d'un alliage de phosphures d'aluminium, d'indium et de gallium (AlInGaP). Chaque bâtonnet électroluminescent s'étend selon un axe d'allongement définissant sa hauteur, la base de chaque bâtonnet étant disposée dans un plan de la face supérieure du substrat.

Les bâtonnets électroluminescents d'une même matrice monolithique présentent avantageusement la même forme et les mêmes dimensions. Ils sont chacun délimités par une face terminale et par une paroi circonférentielle qui s'étend le long de l'axe d'allongement du bâtonnet. Lorsque les bâtonnets électroluminescents sont dopés et font l'objet d'une polarisation, la lumière résultante en sortie de la source à semi-conducteurs est émise essentiellement à partir de la paroi circonférentielle, étant entendu que des rayons lumineux peuvent sortir également de la face terminale. Il en résulte que chaque bâtonnet électroluminescent agit comme une unique diode électroluminescente et que la luminance de cette source est améliorée d'une part par la densité des bâtonnets électroluminescents présents et d'autre part par la taille de la surface éclairante définie par la paroi circonférentielle et qui s'étend donc sur tout le pourtour, et toute la hauteur, du bâtonnet. La hauteur d'un bâtonnet peut être comprise entre 2 et 10 µm, préférentiellement 8 µm; la plus grande dimension de la face terminale d'un bâtonnet est inférieure à 2 µm, préférentiellement inférieure ou égale à 1 µm.

On comprend que, lors de la formation des bâtonnets électroluminescents, la hauteur peut être modifiée d'une zone de la source lumineuse pixélisée à l'autre, de manière à accroitre la luminance de la zone correspondante lorsque la hauteur moyenne des bâtonnets la constituant est augmentée. Ainsi, un groupe de bâtonnets électroluminescents peut avoir une hauteur, ou des hauteurs, différentes d'un autre groupe de bâtonnets électroluminescents, ces deux groupes étant constitutifs de la même source lumineuse à semi-conducteur comprenant des bâtonnets électroluminescents de dimensions submillimétriques. La forme des bâtonnets électroluminescents peut également varier d'une matrice monolithique à l'autre, notamment sur la section des bâtonnets et sur la forme de la face terminale. Les bâtonnets présentent une forme générale cylindrique, et ils peuvent notamment présenter une forme de section polygonale, et plus particulièrement hexagonale. On comprend qu'il importe que de la lumière puisse être émise à travers la paroi circonférentielle, que celle-ci présente une forme polygonale ou circulaire.

Par ailleurs, la face terminale peut présenter une forme sensiblement plane et perpendiculaire à la paroi circonférentielle, de sorte qu'elle s'étend sensiblement parallèlement à la face supérieure du substrat, ou bien elle peut présenter une forme bombée ou en pointe en son centre, de manière à multiplier les directions d'émission de la lumière sortant de cette face terminale.

Les bâtonnets électroluminescents sont agencés en matrice à deux dimensions. Cet agencement pourrait être tel que les bâtonnets soient agencés en quinconce. De manière générale, les bâtonnets sont disposés à intervalles réguliers sur le substrat et la distance de séparation de deux bâtonnets électroluminescents immédiatement adjacents, dans chacune des dimensions de la matrice, doit être au minimum égale à 2 µm, préférentiellement compris entre 3 µm et 10 µm, afin que la lumière émise par la paroi circonférentielle de chaque bâtonnet puisse sortir de la matrice de bâtonnets électroluminescents. Par ailleurs, on prévoit que ces distances de séparation, mesurées entre deux axes d'allongement de bâtonnets adjacents, ne soient pas supérieures à 100 µm.

Selon un autre mode de réalisation, la matrice monolithique peut comporter des éléments électroluminescents formés par des couches d'éléments électroluminescents épitaxiées, notamment une première couche en GaN dopée n et une seconde couche en GaN dopée p, sur un substrat unique, par exemple en carbure de silicium, et que l'on découpe (par meulage et/ou ablation) pour former une pluralité d'émetteurs élémentaires respectivement issus d'un même substrat. Il résulte d'une telle conception une pluralité de blocs électroluminescents tous issus d'un même substrat et connectés électriquement pour être activables sélectivement les uns des autres.

Dans un exemple de réalisation selon cet autre mode, le substrat de la matrice monolithique peut présenter une épaisseur comprise entre 100 µm et 800 µm, notamment égale à 200 µm ; chaque bloc peut présenter une largeur et largeur, chacune étant comprise entre 50 µm et 500 µm, préférentiellement comprise entre 100 µm et 200 µm. Dans une variante, la longueur et la largeur sont égales. La hauteur de chaque bloc est inférieur à 500 µm, préférentiellement inférieur à 300 µm. Enfin la surface de sortie de chaque bloc peut être faite via le subtrat du côté opposée à l'épitaxie. La distance entre chaque émetteur élémentaires contigü peut être inférieure à 1 µm, notamment inférieure à 500 nm, et elle est préférentiellement inférieure à 200 nm.

Selon un autre mode de réalisation non représenté, aussi bien avec des bâtonnets électroluminescents s'étendant respectivement en saillie d'un même substrat, tels que décrit ci-dessus, qu'avec des blocs électroluminescents obtenus par découpage de couches électroluminescentes superposées sur un même substrat, la matrice monolithique peut comporter en outre une couche d'un matériau polymère dans laquelle les éléments électroluminescents sont au moins partiellement noyés. La couche peut ainsi s'étendre sur toute l'étendue du substrat ou seulement autour d'un groupe déterminé d'éléments électroluminescents. Le matériau polymère, qui peut notamment être à base de silicone, crée une couche protectrice qui permet de protéger les éléments électroluminescents sans gêner la diffusion des rayons lumineux. En outre, il est possible d'intégrer dans cette couche de matériau polymère des moyens de conversion de longueur d'onde, et par exemple des luminophores, aptes à absorber au moins une partie des rayons émis par l'un des éléments et à convertir au moins une partie de ladite lumière d'excitation absorbée en une lumière d'émission ayant une longueur d'onde différente de celle de la lumière d'excitation. On pourra prévoir indifféremment que les luminophores sont noyés dans la masse du matériau polymère, ou bien qu'ils sont disposés en surface de la couche de ce matériau polymère.

La source lumineuse pixélisée peut comporter en outre un revêtement de matériau réfléchissant pour dévier les rayons lumineux vers les surfaces de sorties de la source lumineuse.

Les éléments électroluminescents de dimensions submillimétriques définissent dans un plan, sensiblement parallèle au substrat, une surface de sortie déterminée. On comprend que la forme de cette surface de sortie est définie en fonction du nombre et de l'agencement des éléments électroluminescents qui la composent. On peut ainsi définir une forme sensiblement rectangulaire de la surface d'émission, étant entendu que celle-ci peut varier et prendre n'importe quelle forme sans sortir du contexte de l'invention.

La ou les matrices monolithiques aptes à émettre des rayons lumineux peuvent être couplées à l'unité de contrôle. L'unité de contrôle peut être montée sur une ou plusieurs des matrices, l'ensemble formant ainsi un sous-module lumineux. Dans ce cas, l'unité de contrôle peut comporter une unité centrale de traitement couplée avec une mémoire sur laquelle est stockée un programme d'ordinateur qui comprend des instructions permettant au processeur de réaliser des étapes générant des signaux permettant le contrôle de la source lumineuse. L'unité de contrôle peut être un circuit intégré, par exemple un ASIC (acronyme de l'anglais « Application-Specific Integrated Circuit ») ou un ASSP (acronyme de l'anglais « Application Spécifie Standard Product »).

En variante, la source lumineuse pixélisée peut être formé par l'ensemble d'au moins une source de lumière formée d'au moins une diode électroluminescente émettant de la lumière et d'une matrice d'éléments optoélectroniques, et par exemple une matrice de micro-miroirs (également connue sous l'acronyme DMD, pour l'anglais Digital Micromirror Device) qui dirige les rayons lumineux issus de ladite au moins une source de lumière par réflexion vers l'élément optique de projection. Le cas échéant, un élément optique de collection permet de collecter les rayons de la au moins une source de lumière afin de les concentrer et les diriger vers la surface de la matrice de micro-miroirs. Chaque micro miroir peut pivoter entre deux positions fixes, une première position dans laquelle les rayons lumineux sont réfléchis vers l'élément optique de projection, et une deuxième position dans laquelle les rayons lumineux sont réfléchis dans une direction différente de l'élément optique de projection. Les deux positions fixes sont orientées de la même manière pour tous les micro-miroirs et forment par rapport à un plan de référence support de la matrice de micro miroirs un angle caractéristique de la matrice de micro-miroirs, défini dans ses spécifications. Cet angle est généralement inférieur à 20° et vaut usuellement environ 12°. Ainsi, chaque micro-miroir réfléchissant une petite partie des rayons lumineux incidents sur la matrice de micro-miroir forme un émetteur élémentaire de la source lumineuse pixélisée, l'actionnement et le pilotage du changement de position permet d'activer sélectivement cet émetteur élémentaire pour émettre ou non un faisceau lumineux élémentaire

En variante encore, la source lumineuse pixélisée peut être formée par un système à balayage laser dans lequel une source laser émet un faisceau laser vers des moyens de balayage configurés pour balayer avec le faisceau laser la surface d'un élément convertisseur de longueur d'ondes, surface qui est imagée par l'élément optique de projection. Le balayage du faisceau est accompli par les moyens de balayage à une vitesse suffisamment grande pour que l'oeil humain ne perçoive pas son déplacement dans l'image projetée. Le pilotage synchronisé de l'allumage de la source laser et du mouvement de balayage du faisceau permet de générer une matrice d'émetteurs élémentaires activables sélectivement au niveau de la surface de l'élément convertisseur de longueur d'onde. Ici, les moyens de balayage sont un micro-miroir mobile, permettant de balayer la surface de l'élément convertisseur de longueur d'ondes par réflexion du faisceau laser. Les micro-miroirs mentionnés comme moyen de balayage sont par exemple de type MEMS (pour « Micro-Electro-Mechanical Systems » en anglais ou microsystème électromécanique). Cependant, l'invention n'est nullement limitée à ce moyen de balayage et peut utiliser d'autres sortes de moyens de balayage, telle une série de miroirs agencés sur un élément rotatif, la rotation de l'élément engendrant un balayage de la surface de transmission par le faisceau laser

Le cas échéant, le deuxième module lumineux peut être agencé pour que le deuxième faisceau de type croisement pixélisé présente entre 5 et 400 pixels, notamment 9 pixels. Par exemple, le deuxième faisceau de type croisement pixélisé peut présenter une unique ligne de pixels, ou en variante, plusieurs lignes de pixels disposées les unes au-dessus des autres.

Avantageusement, le deuxième module peut être agencé pour que chaque pixel du deuxième faisceau de type croisement pixélisé présente une largeur et/ou une longueur strictement supérieure à 0,5°, et notamment supérieure à 1 °.

Avantageusement encore, le deuxième module lumineux peut être agencé pour que le deuxième faisceau de type croisement pixélisé présente une amplitude verticale d'au moins 5° et une amplitude horizontale d'au moins 15°.

On entend par faisceau de type croisement un faisceau lumineux destiné à éclairer la route sans éblouir les autres usagers de la route. A cet effet, le deuxième module lumineux est agencé pour que le deuxième faisceau de type croisement pixélisé présente une coupure supérieure de type croisement, cette coupure supérieure étant définie par les bords supérieurs des pixels composant la dernière ligne supérieure de ce deuxième faisceau lumineux.

La coupure supérieure de type croisement pourra par exemple présenter une portion horizontale et une portion oblique. On pourra par exemple se référer au règlement ECE n°123 dans lequel est définie une coupure réglementaire présentant une portion horizontale placée à 0,57° en dessous de l'horizon et une portion oblique inclinée à 15° par rapport à la portion horizontale.

En variante, la coupure supérieure de type croisement pourra comporte une unique portion horizontale plate.

Dans un mode de réalisation de l'invention, les premier et deuxième modules lumineux sont agencés pour que que les premier et deuxième faisceaux se recouvrent de sorte à ce que le premier faisceau pixélisé s'étende dans le faisceau global exclusivement en dessous de la coupure supérieure du deuxième faisceau de type croisement pixélisé.

Le cas échéant, le faisceau global présente une coupure horizontale supérieure formée uniquement par la coupure horizontale supérieure du deuxième faisceau de type croisement pixélisé. Dans ce cas, le premier faisceau pixélisé est ainsi complètement englobé dans le deuxième faisceau de type croisement pixélisé, le recouvrement vertical est alors total. On bénéficie ainsi d'une zone de projection entièrement dédiée à une fonction d'écriture sur route et on garantie qu'en cas de problème au niveau du premier module, la totalité de la fonction d'éclairage de croisement est conservée.

Dans un autre mode de réalisation de l'invention, les premier et deuxième modules lumineux sont agencés pour que les premier et deuxième faisceaux se recouvrent de sorte à ce que le premier faisceau pixélisé s'étende dans le faisceau global au-dessus et en dessous de la coupure supérieure du deuxième faisceau de type croisement pixélisé. Le cas échéant, la portion du premier faisceau pixélisé s'étendant au-dessus du deuxième faisceau de type croisement pixélisé peut réaliser une portion, par exemple oblique, d'une coupure de type croisement destinée à être associée à la coupure supérieure du deuxième faisceau. Dans ce cas, cette portion peut par exemple être déplacée lorsque le véhicule aborde un virage pour améliorer les performances de la fonction d'éclairage dynamique de virage. D'autre part, cette portion du premier faisceau pixélisé s'étendant au-dessus du deuxième faisceau de type croisement pixélisé peut réaliser une fonction d'éclairage de type route sélectif.

Avantageusement, le deuxième module lumineux est agencé pour que le deuxième faisceau de type croisement pixélisé s'étende horizontalement de façon sensiblement symétrique de part et d'autre d'un axe vertical et le premier module lumineux est agencé pour que le premier faisceau pixélisé s'étende horizontalement de façon sensiblement asymétrique de part et d'autre de cet axe vertical. Cet axe vertical peut par exemple être un axe vertical interceptant l'axe optique dudit dispositif lumineux. Dans le cas d'un deuxième faisceau de type croisement pixélisé comportant une portion de coupure horizontale et une portion de coupure oblique, l'axe vertical peut notamment passer par la jonction de ces deux portions horizontale et oblique.

De préférence, le premier faisceau pixélisé peut s'étendre horizontalement majoritairement du côté extérieur-véhicule, lorsque le dispositif lumineux est monté sur le véhicule. On garantit ainsi que la zone de projection pour la fonction d'écriture au sol est suffisamment étendue pour que le motif puisse être déplacé quelque soit la courbure du virage abordé par le véhicule.

Avantageusement, les premier et deuxième modules lumineux sont agencés pour qu'au moins un bord de chaque pixel du premier faisceau pixélisé coïncide avec un bord d'un pixel du deuxième faisceau de type croisement pixélisé.

On entend coïncidence de bords de pixels une superposition de ces bords lorsque les pixels sont projetés sur la route ou sur un écran, par exemple disposé à 25 mètres du dispositif lumineux. De préférence, les premier et deuxième modules lumineux sont agencés pour qu'au moins un bord vertical de chaque pixel du deuxième faisceau de type croisement pixélisé coïncide avec un bord vertical d'un pixel du premier faisceau de type croisement pixélisé. Le cas échéant, la largeur des pixels du deuxième faisceau est proportionnelle à la largeur des pixels du premier faisceau. On peut ainsi obtenir un recouvrement des premier et deuxième faisceaux avec entrelacement des pixels, de sorte à ce que le faisceau global présente une homogénéité satisfaisante, c'est-à-dire sans inhomogénéité entre deux pixels du faisceau global.

Selon l'invention, l'unité de contrôle est agencée pour contrôler sélectivement, en fonction d'instructions de contrôle qu'elle reçoit, l'intensité lumineuse de ladite pluralité de pixels des premier et deuxième faisceaux de sorte à ce que le motif soit projeté dans le faisceau global par une différence d'intensité entre ces pixels des premier et deuxième faisceaux lumineux.

On entend par contrôle de l'intensité lumineuse d'un pixel l'allumage ou l'extinction de ce pixel ainsi que la sous-intensification ou la sur-intensification de l'intensité lumineuse de ce pixel.

Selon l'invention, le motif destiné à être projeté est défini par une matrice de points et l'unité de contrôle est agencée pour contrôler sélectivement l'intensité lumineuse d'une pluralité de pixels des premier et deuxième faisceaux situés dans une zone de projection située au niveau du recouvrement des premier et deuxième faisceaux de sorte à générer un contraste entre chaque paire de pixels entre le pixel du premier faisceau et le pixel du deuxième faisceau de cette pluralité de pixels qui se recouvrent, chaque contraste correspondant à un point de ladite matrice de points.

En d'autres termes, le recouvrement des premier et deuxième faisceaux pixélisés définit une zone de projection matricielle qui est contrôlable pour y afficher un motif.

Le cas échéant, le motif peut être généré par des contrastes positifs, c'est-à-dire par des différences d'intensités positives dans chaque paire de pixels entre le pixel du premier faisceau et le pixel du deuxième faisceau, par exemple par sur-intensification du pixel du premier faisceau et/ou par sous-intensification du pixel du deuxième faisceau.

Si on le souhaite, l'unité de contrôle est agencée pour diminuer l'intensité lumineuse de tous les pixels du deuxième faisceau de type croisement pixélisé au niveau de ladite zone de projection. Le cas échéant, l'intensité lumineuse du reste des pixels du deuxième faisceau de type croisement pixélisé, en dehors de la zone de projection, reste inchangée. On améliore ainsi le contraste et donc la perceptibilité du motif par rapport au reste du deuxième faisceau de type croisement pixélisé.

Selon l'invention, l'unité de contrôle est agencée de sorte à contrôler les pixels du premier faisceau et/ou du deuxième faisceau lorsque le véhicule automobile aborde un virage de sorte à modifier l'intensité lumineuse du faisceau global en direction du virage. Le cas échéant, l'unité de contrôle est agencée de sorte à contrôler les pixels du premier faisceau et/ou du deuxième faisceau lorsque le véhicule automobile aborde un virage :
- pour augmenter l'amplitude horizontale du faisceau global en direction du virage, les pixels du faisceau global étant par exemple allumés ou sur-intensifiés progressivement en direction du virage, et/ou
- pour déplacer l'intensité maximale du faisceau global en direction du virage et
- pour déplacer une portion d'une coupure supérieure, notamment d'une portion oblique d'une coupure supérieure, du faisceau global en direction du virage.

Selon l'invention, l'unité de contrôle est agencée pour contrôler sélectivement l'intensité lumineuse de ladite pluralité de pixels des premier et deuxième faisceaux situés dans la zone de projection de sorte à déplacer chaque contraste entre une paire de pixels de cette pluralité de pixels qui se recouvrent vers une autre paire de pixels de cette pluralité de pixels qui se recouvrent de sorte à créer un déplacement dudit motif dans le faisceau global en direction du virage. On entend par déplacement d'un contraste d'une première paire de pixels à une deuxième paire de pixels le contrôle de cette deuxième paire de pixel de sorte à ce que le contraste de cette deuxième paire soit sensiblement identique à celui de la première paire. De la sorte, on garantit ainsi la conservation du contraste lors du déplacement du motif, de sorte à ne pas perturber le conducteur.

Avantageusement, le dispositif lumineux comporte un troisième module lumineux apte à projeter un troisième faisceau de type route pixélisé, les premier et troisième modules lumineux étant agencés de sorte à ce que les premier et troisième faisceaux se recouvrent au moins partiellement verticalement.

L'invention a également pour objet un système lumineux pour un véhicule automobile, le système comportant un dispositif lumineux selon l'invention telle que décrite précédemment et un dispositif de détection d'un virage destiné à être abordé par le véhicule automobile, l'unité de contrôle du dispositif lumineux étant agencée pour recevoir des informations dudit dispositif de détection de virage et pour contrôler les pixels des faisceaux projetés par les modules lumineux du dispositif lumineux en fonction desdites informations.

Le dispositif de détection peut notamment être une caméra filmant la route associé à un logiciel de traitement d'image, ou encore un capteur d'angle au volant.

Avantageusement, le système comporte un dispositif de détection de conditions de circulation du véhicule et/ou de réception d'informations relatives aux conditions de circulation du véhicule, et l'unité de contrôle est agencée pour recevoir des informations relatives à ces conditions de circulation dudit dispositif de détection et/ou de réception et pour contrôler sélectivement ladite pluralité de pixels des premier et deuxième faisceaux de sorte à projeter un motif dans le faisceau global relatif auxdites conditions de circulation.

Par exemple, le dispositif de détection et/ou de réception peut être une caméra, un lidar, un GPS, ou un récepteur sans-fil. Le cas échéant, les informations de conditions de circulations détectées ou reçues peuvent être la présence ou l'absence d'un marquage au sol, une trajectoire optimale du véhicule à emprunter, une information de navigation GPS, la présence d'un panneau de signalisation, la présence d'un obstacle ou d'un danger, ou l'état du trafic.

D'autres caractéristiques et avantages de la présente invention seront mieux compris à l'aide de la description des exemples et des dessins parmi lesquels :
- les figures 1A et 1B montrent des vues de face et de dessus d'un dispositif lumineux selon un mode de réalisation préféré de l'invention ;
- la figure 1C montre les faisceaux lumineux projetés par le dispositif lumineux des figures 1A et 1B ;
- la figure 2A montre les faisceaux lumineux projetés par le dispositif lumineux des figures 1A et 1B sur la route lorsque le véhicule circule sur une route droite et la figure 2B montre les faisceaux lumineux projetés par le dispositif lumineux des figures 1A et 1B sur la route lorsque le véhicule aborde un virage.

Sauf indication spécifique du contraire, des caractéristiques techniques décrites en détail pour un mode de réalisation donné peuvent être combinées aux caractéristiques techniques décrites dans le contexte d'autres modes de réalisation décrits à titre d'exemples et de manière non limitative.

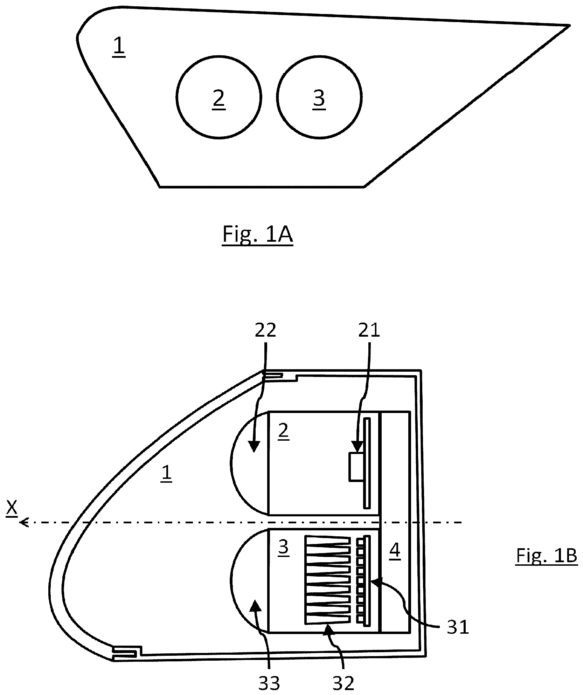

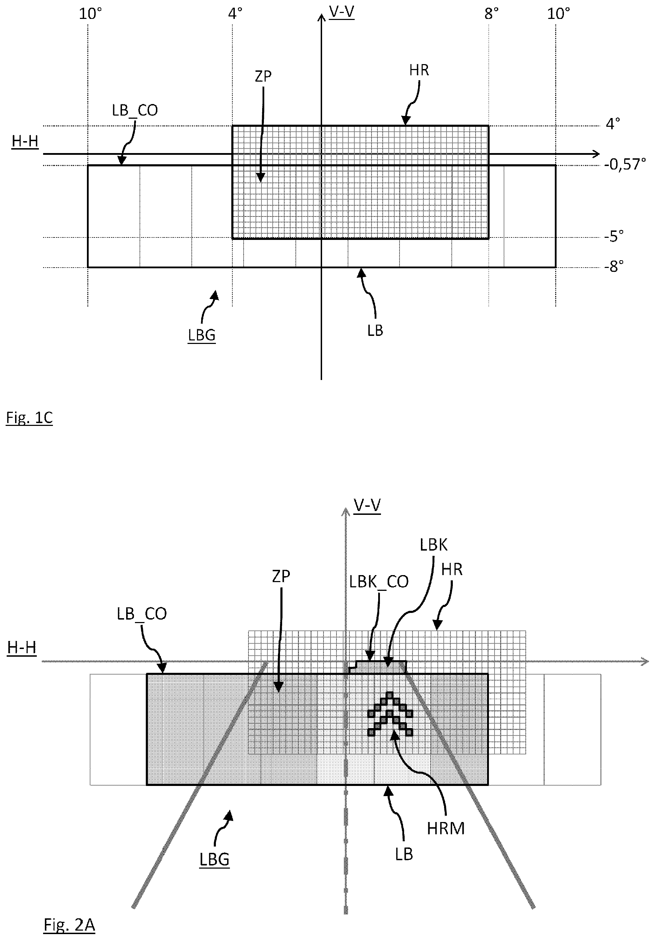

On a représenté en figures 1A et 1B un dispositif lumineux 1 selon un mode de réalisation de l'invention. Ce dispositif lumineux comporte un premier module lumineux 2 apte à projeter un premier faisceau pixélisé HR et un deuxième module lumineux 3 apte à projeter un deuxième faisceau de type croisement pixélisé LB. Les premier et deuxième faisceaux pixélisés HR et LB ont été représentés en figure 1C, en projection sur un écran placé à 25 mètres du dispositif lumineux 1 et sur lequel ont été matérialisé un axe horizontal H-H représentant l'horizon et un axe vertical V-V, perpendiculaire à l'axe horizontal H-H et croisant l'axe optique X du dispositif lumineux 1.

Le premier module 2 comporte :
- une source lumineuse pixélisée 21 comportant 900 émetteurs élémentaires agencés en matrice de 20 lignes par 45 colonnes, chacun des émetteurs élémentaires étant activable sélectivement pour émettre un faisceau lumineux élémentaire ; et
- un élément optique de projection 22 associé à ladite source lumineuse pour projeter chacun desdits faisceaux lumineux élémentaires sous la forme d'un pixel présentant une largeur et une longueur de 0,3°.

L'ensemble des pixels projetés par le premier module 2 forme ledit premier faisceau pixélisé HR. Ce faisceau HR présente une amplitude horizontale de 12° et une amplitude verticale de 9°. Il s'étend de façon asymétrique de part et d'autre de l'axe vertical V-V. Dans le cas présent, le dispositif lumineux 1 étant un projecteur droit du véhicule, le faisceau HR s'étend sur 4° du côté intérieur-véhicule et sur 8° du côté extérieur-véhicule. Il s'étend également sur 4° au dessus de l'axe horizontal H-H et sur 5° en dessous de l'axe horizontal H-H.

Dans le mode décrit, la source lumineuse 21 comprend une matrice d'éléments électroluminescents monolithique, telle que décrit précédemment.

On pourra prévoir de remplacer la source lumineuse 21 par n'importe quel autre type de source lumineuse pixélisée décrit ci-dessus, comme par exemple une matrice de diodes électroluminescentes ou une source lumineuse associée à une matrice d'éléments optoélectroniques comme des micro-miroirs.

Le premier module lumineux peut comprendre d'autres éléments que ceux précédemment décrits. Ces éléments ne seront pas décrits dans le cadre de la présente invention puisqu'ils n'interagissent pas de manière fonctionnelle avec les dispositions selon l'invention.

Le deuxième module 3 comporte :
- une matrice 31 d'émetteurs élémentaires comportant 9 diodes électroluminescentes activables sélectivement et agencées le long d'une ligne, chaque diode pouvant émettre un faisceau lumineux élémentaire ;
- une pluralité 32 d'éléments optiques primaires disposés devant la matrice 31 pour collecter, mettre en forme et guider les faisceaux lumineux élémentaires issus de chacune des diodes électroluminescente ; et
- un élément optique de projection 33 disposé devant les éléments optiques primaires pour projeter chacun desdits faisceaux lumineux élémentaires issus des éléments optiques primaires sous la forme d'un pixel présentant une largeur de 3° et une longueur de 5°

On pourra notamment se reporter au document FR3056692 qui décrit le principe de fonction d'un tel module.

L'ensemble des pixels projetés par le deuxième module 3 forme ledit deuxième faisceau pixélisé LB. Ce faisceau LB présente une amplitude horizontale de 20° et une amplitude verticale de 8°.

Le deuxième module lumineux 3 est agencé pour que le deuxième faisceau de type croisement pixélisé présente une coupure supérieure de type croisement LB_CO. Dans le cas présent, les éléments optiques primaires 32 sont agencés pour que leurs surfaces de sortie soient aboutées de sorte à ce que les bords inférieurs de ces surfaces soient jointifs et alignés et l'élément optique de projection 33 est focalisé sur ces surfaces de sortie. De la sorte, l'élément optique de projection 33 vient imager ces bords inférieurs en une coupure supérieure LB_CO, définie par les bords supérieurs des pixels composant ce deuxième faisceau lumineux.

Dans l'exemple décrit, la coupure supérieure comporte une unique portion horizontale plate, disposée à 0,57° en dessous de l'axe horizontal H-H.

Le deuxième faisceau pixélisé forme ainsi un faisceau de type croisement pixélisé.

On observe ainsi en figure 1C que :
- le premier faisceau pixélisé HR présente un nombre de pixels supérieur au nombre de pixel du deuxième faisceau de type croisement pixélisé LB ;
- chaque pixel du premier faisceau pixélisé HR présente une largeur et une longueur inférieure respectivement aux largeur et longueur des pixels du deuxième faisceau de type croisement pixélisé LB ; et
- le premier faisceau pixélisé HR présente une amplitude horizontale inférieure à l'amplitude horizontale du deuxième faisceau de type croisement pixélisé LB.

Il s'ensuit donc que la résolution du premier faisceau pixélisé HR est supérieure à la résolution du deuxième faisceau de type croisement pixélisé LB.

Selon l'invention, les premier et deuxième modules lumineux 2 et 3 sont agencés pour que les premier et deuxième faisceaux HR et LB se recouvrent partiellement verticalement pour former un faisceau global LBG.

Le premier faisceau pixélisé HR s'étend ainsi au-dessus et en dessous de la coupure supérieure LB_CO du deuxième faisceau de type croisement pixélisé LB.

Le recouvrement est tel que chaque bord vertical de chaque pixel du deuxième faisceau de type croisement pixélisé LB coïncide avec un bord vertical d'un pixel du premier faisceau pixélisé HR.

Enfin, le dispositif lumineux 1 comporte une unité de contrôle 4 apte à contrôler sélectivement l'intensité lumineuse de chacun des pixels des premier et deuxième faisceaux HR et LB en fonction d'instructions de contrôle qu'elle reçoit, par exemple en allumant, en éteignant sélectivement les émetteurs élémentaires des sources lumineuses 21 et 31 ou encore en variant de façon croissante ou décroissante la puissance électrique fournie à chacun de ces émetteurs élémentaires.

Le recouvrement des premier et deuxième faisceaux pixélisés définit une zone de projection ZP matricielle formée par le recouvrement d'une pluralité de pixels des premier et deuxième faisceaux pixélisés HR et LB. Chaque pixel de la zone de projection ZP est ainsi formé par une paire d'un pixel du premier faisceau HR et d'un pixel du deuxième faisxeau LB qui se recouvrent l'un l'autre. Ce pixel de la zone de projection ZP est par conséquent contrôlable par l'unité de contrôle 4, en contrôlant conjointement les intensités lumineuses de chaque pixel de la paire de pixels.

On a représenté en figure 2A un premier mode de fonctionnement du dispositif lumineux 1 des figures 1A à 1C. Dans ce mode, le véhicule équipé du dispositif lumineux 1 circule sur une ligne de droite. Ce véhicule est équipé d'un dispositif de détection d'un virage destiné à être abordé par le véhicule automobile et d'un dispositif de détection et de réception d'informations relatives aux conditions de circulation du véhicule.

Le dispositif de détection d'un virage détecte que le véhicule circule en ligne droite, et le dispositif de détection d'informations relatives aux conditions de circulation du véhicule reçoit des informations GPS à transmettre au conducteur via le dispositif lumineux 1.

D'une part, l'unité de contrôle 4 contrôle une pluralité de pixels du deuxième faisceau de type croisement pixélisé LB pour éclairer l'intégralité de la route, le reste des pixels de ce deuxième faisceau LB restant donc éteint.

D'autre part, l'unité de contrôle 4 contrôle une première pluralité de pixels LBK du premier faisceau pixélisé HR s'étendant au-dessus de la coupure LB_CO pour compléter le deuxième faisceau LB et former une portion oblique de coupure LBK_CO qui est associée à la coupure LB_CO pour former ensemble un profil de coupure de type croisement réglementaire.

Enfin, l'unité de contrôle 4 contrôle une deuxième pluralité de pixels HRM du premier faisceau pixélisé HR dans la zone de projection ZP de sorte à créer des sur-intensifications lumineuses locales dans les pixels du deuxième faisceau LB avec lesquels cette deuxième pluralité de pixels HRM se recouvrent, le reste des pixels du premier faisceau pixélisé restant éteint. Ces sur-intensifications créent ainsi des contrastes positifs qui forment en conséquence un motif dans la zone de projection, qui indique au conducteur la direction à suivre.

Afin de renforcer le contraste et rendre le motif encore plus perceptible, l'unité de contrôle 4 diminue l'intensité lumineuse des pixels du deuxième faisceau LB avec lesquels la deuxième pluralité de pixels HRM se recouvrent.

L'unité de contrôle 4 réalise ainsi une fonction d'écriture sur route.

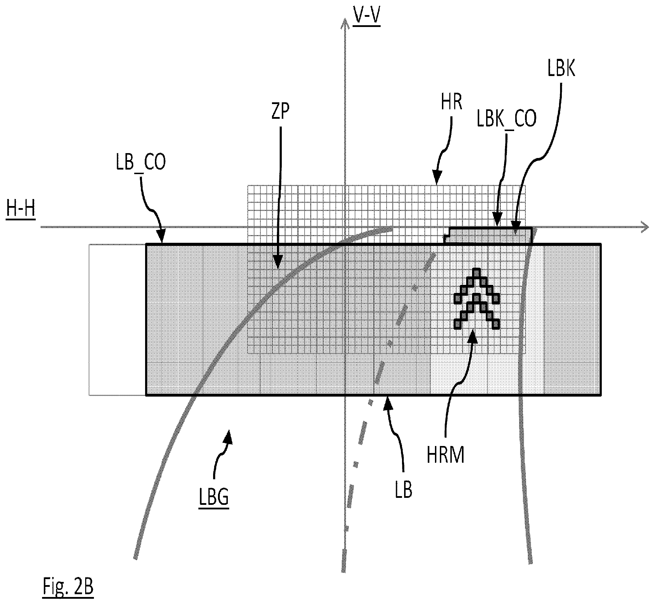

On a représenté en figure 2B un deuxième mode de fonctionnement du dispositif lumineux 1 des figures 1A à 1C, succédant au mode de fonctionnement de la figure 2A. Dans ce mode, le véhicule équipé du dispositif lumineux 1 aborde un virage. Le dispositif de détection d'un virage détecte ainsi que le véhicule aborde un virage.

D'une part, l'unité de contrôle 4 réalise une fonction d'éclairage dynamique du virage en :
- en allumant des pixels du deuxième faisceau de type croisement pixélisé LB en direction du virage,
- en déplaçant la portion oblique de coupure LBK_CO du premier faisceau pixélisé HR en direction du virage, en éteignant progressivement la première pluralité de pixels LBK de la figure 2A et en allumant une autre pluralité de pixels LBK du premier faisceau pixélisé HR du côté du virage.

Afin de conserver les contrastes entre les pixels des premier et deuxième faisceaux HR et LB au niveau de la zone de projection ZP qui permettent au conducteur de percevoir le motif, l'unité de contrôle 4 déplace alors également le motif en direction du virage en éteignant progressivement la deuxième pluralité de pixels HRM de la figure 2A et en allumant une autre pluralité de pixels HRM du premier faisceau pixélisé HR du côté du virage. De même que précédemment, l'unité de contrôle 4 diminue l'intensité lumineuse des pixels du deuxième faisceau LB avec lesquels la deuxième pluralité de pixels HRM se recouvrent.

On garantit ainsi la conservation du contraste par le déplacement du motif en même temps que le déplacement de certaines parties du faisceau de type croisement pixélisé, de sorte à ne pas perturber le conducteur. Le motif reste en outre perceptible par le conducteur, en gardant sa position dans la zone de projection du point de vue du conducteur.

La description qui précède explique clairement comment l'invention permet d'atteindre les objectifs qu'elle s'est fixée et notamment de proposer une solution permettant de projeter un motif dans un faisceau de type croisement, ce motif restant perceptible sans modification brusque lors de la mise en oeuvre d'une fonction d'éclairage dynamique de virage. Le dispositif lumineux selon l'invention permet de conserver les caractéristiques de contraste permettant de percevoir le motif, lorsque la fonction d'éclairage dynamique de virage est mise en oeuvre.

L'invention ne saurait se limiter aux modes de réalisation spécifiquement donnés dans ce document à titre d'exemples non limitatifs, et est définie par les revendications.

## Revendications

1. Dispositif lumineux (1) pour un véhicule automobile comportant un premier module lumineux (2) apte à projeter un premier faisceau pixélisé (HR) selon une première résolution et un deuxième module lumineux (3) apte à projeter un deuxième faisceau de type croisement pixélisé (LB) selon une deuxième résolution, le deuxième faisceau présentant une coupure supérieure de type croisement,
les premier et deuxième modules lumineux étant agencés de sorte à ce que les premier et deuxième faisceaux se recouvrent au moins partiellement verticalement pour former un faisceau global (LBG), le recouvrement des premier et deuxième faisceaux pixélisés (HR, LB) définit une zone de projection (ZP) matricielle formée par le recouvrement d'une pluralité de pixels des premier et deuxième faisceaux pixélisés,
le dispositif comportant une unité de contrôle (4) apte à contrôler sélectivement une pluralité de pixels (HRM) des premier et deuxième faisceaux de sorte à projeter un motif dans le faisceau global ,
- le motif étant défini par une matrice de points et l'unité de contrôle (4) étant agencée pour contrôler sélectivement l'intensité lumineuse d'une pluralité (HRM) de pixels des premier et deuxième faisceaux (HR,LB) situés dans la zone de projection (ZP) de sorte à générer un contraste dans chaque paire de pixels entre le pixel du premier faisceau (HR) et le pixel du deuxième faisceau (LB) de cette pluralité de pixels qui se recouvrent, chaque contraste correspondant à un point de ladite matrice de points ; et
- lorsque le véhicule automobile aborde un virage :
∘ l'unité de contrôle est agencée pour contrôler sélectivement l'intensité lumineuse de ladite pluralité de pixels (HRM) des premier et deuxième faisceaux (HR,LB) situés dans la zone de projection (ZP) de sorte à déplacer chaque contraste dans une paire de pixels de cette pluralité de pixels qui se recouvrent vers une autre paire de pixels de cette pluralité de pixels qui se recouvrent de sorte à créer un déplacement dudit motif dans le faisceau global en direction du virage;
le dispositif lumineux étant **caractérisé en ce que** la deuxième résolution est inférieure à la première résolution, et **en ce que**
∘ l'unité de contrôle (4) est agencée de sorte à contrôler les pixels du premier faisceau (HR) et/ou du deuxième faisceau (LB) lorsque le véhicule automobile aborde un virage pour déplacer une portion d'une coupure supérieure du faisceau global en direction du virage.

2. Dispositif lumineux (1) selon la revendication précédente, dans lequel les premier et deuxième modules lumineux (2,3) sont agencés pour que :
- le premier faisceau pixélisé (HR) présente un nombre de pixels supérieur au nombre de pixel du deuxième faisceau de type croisement pixélisé (LB) ; et/ou
- chaque pixel du premier faisceau pixélisé présente une largeur et/ou une longueur strictement inférieure respectivement à la largeur minimale et/ou la longueur minimale des pixels du deuxième faisceau de type croisement pixélisé ;
- le premier faisceau pixélisé présente une amplitude horizontale inférieure à l'amplitude horizontale du deuxième faisceau de type croisement pixélisé.

3. Dispositif lumineux (1) selon la revendication précédente, dans lequel les premier et deuxième modules lumineux (2,3) sont agencés pour que les premier et deuxième faisceaux (HR,LB) se recouvrent de sorte à ce que le premier faisceau pixélisé s'étende dans le faisceau global (LBG) exclusivement en dessous de la coupure supérieure (LB_CO) du deuxième faisceau de type croisement pixélisé.

4. Dispositif lumineux (1) selon l'une des revendications 1 à 2, dans lequel les premier et deuxième modules lumineux (2,3) sont agencés pour que les premier et deuxième faisceaux (HR, LB) se recouvrent de sorte à ce que le premier faisceau pixélisé s'étende dans le faisceau global (LBG) au-dessus et en dessous de la coupure supérieure (LB_CO) du deuxième faisceau de type croisement pixélisé.

5. Dispositif lumineux (1) selon la revendication précédente, dans lequel la portion du premier faisceau pixélisé (HR) s'étendant au-dessus du deuxième faisceau de type croisement pixélisé (LB) réalise une portion d'une coupure de type croisement destinée à être associée à la coupure supérieure du deuxième faisceau et dans lequel ladite portion est déplacée lorsque le véhicule aborde un virage dans le sens du virage.

6. Dispositif lumineux (1) selon l'une des revendications précédentes, dans lequel le deuxième module lumineux (3) est agencé pour que le deuxième faisceau de type croisement pixélisé (LB) s'étende horizontalement de façon sensiblement symétrique de part et d'autre d'un axe vertical (V-V) et le premier module lumineux (2) est agencé pour que le premier faisceau pixélisé (HR) s'étende horizontalement de façon sensiblement asymétrique de part et d'autre de cet axe vertical.

7. Dispositif lumineux (1) selon l'une des revendications précédentes, dans lequel l'unité de contrôle (4) est agencée pour diminuer l'intensité lumineuse de tous les pixels du deuxième faisceau de type croisement pixélisé (LB) au niveau de ladite zone de projection (ZP).

8. Dispositif lumineux (1) selon l'une des revendications précédentes, dans lequel le premier module lumineux (2) comporte une matrice d'éléments électroluminescents monolithique (21).

9. Système lumineux pour un véhicule automobile, le système comportant un dispositif lumineux (1) selon l'une des revendications précédentes et un dispositif de détection d'un virage destiné à être abordé par le véhicule automobile, l'unité de contrôle (4) du dispositif lumineux étant agencée pour recevoir des informations dudit dispositif de détection de virage et pour contrôler les pixels des faisceaux (HR,LB) projetés par les modules lumineux (2,3) du dispositif lumineux en fonction desdites informations.

10. Système lumineux selon la revendication précédente, **caractérisé en ce qu'**il comporte un dispositif de détection de conditions de circulation du véhicule et/ou de réception d'informations relatives aux conditions de circulation du véhicule, et **en ce que** l'unité de contrôle (4) est agencée pour recevoir des informations relatives à ces conditions de circulation dudit dispositif de détection et/ou de réception et pour contrôler sélectivement ladite pluralité de pixels (HRM) des premier et deuxième faisceaux(HR,LB) de sorte à projeter un motif dans le faisceau global (LBG) relatif auxdites conditions de circulation.

## Patentansprüche

1. Leuchtvorrichtung (1) für ein Kraftfahrzeug, die ein erstes Leuchtmodul (2), das fähig ist, einen gemäß einer ersten Auflösung verpixelten ersten Strahl (HR) zu projizieren, und ein zweites Leuchtmodul (3) aufweist, das fähig ist, einen gemäß einer zweiten Auflösung verpixelten zweiten Strahl vom Typ Abblendlicht (LB) zu projizieren, wobei der zweite Strahl eine obere Hell-Dunkel-Grenze vom Typ Abblendlicht aufweist,
wobei die ersten und zweiten Leuchtmodule so eingerichtet sind, dass die ersten und zweiten Strahlen sich zumindest teilweise senkrecht überdecken, um einen globalen Strahl (LBG) zu bilden, wobei die Überdeckung der ersten und zweiten verpixelten Strahlen (HR, LB) eine Matrixprojektionszone (ZP) definiert, die von der Überdeckung einer Vielzahl von Pixeln der ersten und zweiten verpixelten Strahlen gebildet wird,
wobei die Vorrichtung eine Steuereinheit (4) aufweist, die fähig ist, selektiv eine Vielzahl von Pixeln (HRM) der ersten und zweiten Strahlen zu steuern, um ein Muster in den globalen Strahl zu projizieren,
- wobei das Muster von einer Punktematrix definiert wird und die Steuereinheit (4) eingerichtet ist, um die Lichtstärke einer Vielzahl (HRM) von in der Projektionszone (ZP) befindlichen Pixeln der ersten und zweiten Strahlen (HR, LB) selektiv zu steuern, um in jedem Paar von Pixeln einen Kontrast zwischen dem Pixel des ersten Strahls (HR) und dem Pixel des zweiten Strahls (LB) dieser Vielzahl von sich überdeckenden Pixeln zu erzeugen, wobei jeder Kontrast einem Punkt der Punktematrix entspricht; und
- wenn das Kraftfahrzeug sich einer Kurve nähert:
o die Steuereinheit eingerichtet ist, um die Lichtstärke der Vielzahl (HRM) von in der Projektionszone (ZP) befindlichen Pixeln der ersten und zweiten Strahlen (HR, LB) selektiv zu steuern, um jeden Kontrast in einem Paar von Pixeln dieser Vielzahl von sich überdeckenden Pixeln zu einem anderen Paar von Pixeln dieser Vielzahl von sich überdeckenden Pixeln zu verschieben, um eine Verschiebung des Musters im globalen Strahl in Richtung der Kurve zu erzeugen;
wobei die Leuchtvorrichtung **dadurch gekennzeichnet ist, dass** die zweite Auflösung niedriger ist als die erste Auflösung, und dass
o die Steuereinheit (4) so eingerichtet ist, dass sie, wenn das Kraftfahrzeug sich einer Kurve nähert, die Pixel des ersten Strahls (HR) und/oder des zweiten Strahls (LB) steuert, um einen Teil einer oberen Hell-Dunkel-Grenze des globalen Strahls in Richtung der Kurve zu verschieben.

2. Leuchtvorrichtung (1) nach dem vorhergehenden Anspruch, wobei die ersten und zweiten Leuchtmodule (2, 3) eingerichtet sind, damit:
- der erste verpixelte Strahl (HR) eine größere Anzahl von Pixeln als die Anzahl von Pixeln des zweiten verpixelten Strahls vom Typ Abblendlicht (LB) aufweist; und/oder
- jedes Pixel des ersten verpixelten Strahls eine Breite und/oder eine Länge strikt geringer als die minimale Breite und/oder die minimale Länge der Pixel des zweiten verpixelten Strahls vom Typ Abblendlicht aufweist;
- der erste verpixelte Strahl eine waagrechte Amplitude geringer als die waagrechte Amplitude des zweiten verpixelten Strahls vom Typ Abblendlicht aufweist.

3. Leuchtvorrichtung (1) nach dem vorhergehenden Anspruch, wobei die ersten und zweiten Leuchtmodule (2, 3) eingerichtet sind, damit die ersten und zweiten Strahlen (HR, LB) sich so überdecken, dass der erste verpixelte Strahl sich im globalen Strahl (LBG) ausschließlich unter der oberen Hell-Dunkel-Grenze (LB_CO) des zweiten verpixelten Strahls vom Typ Abblendlicht erstreckt.

4. Leuchtvorrichtung (1) nach einem der Ansprüche 1 bis 2, wobei die ersten und zweiten Leuchtmodule (2, 3) eingerichtet sind, damit die ersten und zweiten Strahlen (HR, LB) sich so überdecken, dass der erste verpixelte Strahl sich im globalen Strahl (LBG) über und unter der oberen Hell-Dunkel-Grenze (LB_CO) des zweiten verpixelten Strahls vom Typ Abblendlicht erstreckt.

5. Leuchtvorrichtung (1) nach dem vorhergehenden Anspruch, wobei der Teil des ersten verpixelten Strahls (HR), der sich über dem zweiten verpixelten Strahl vom Typ Abblendlicht (LB) erstreckt, einen Teil einer Hell-Dunkel-Grenze vom Typ Abblendlicht realisiert, der dazu bestimmt ist, der oberen Hell-Dunkel-Grenze des zweiten Strahls zugeordnet zu werden, und wobei der Teil, wenn das Fahrzeug sich einer Kurve nähert, in Richtung der Kurve verschoben wird.

6. Leuchtvorrichtung (1) nach einem der vorhergehenden Ansprüche, wobei das zweite Leuchtmodul (3) eingerichtet ist, damit der zweite verpixelte Strahl vom Typ Abblendlicht (LB) sich waagrecht im Wesentlichen symmetrisch auf beiden Seiten einer senkrechten Achse (V-V) erstreckt, und das erste Leuchtmodul (2) eingerichtet ist, damit der erste verpixelte Strahl (HR) sich waagrecht im Wesentlichen unsymmetrisch zu beiden Seiten dieser senkrechten Achse erstreckt.

7. Leuchtvorrichtung (1) nach einem der vorhergehenden Ansprüche, wobei die Steuereinheit (4) eingerichtet ist, um die Lichtstärke aller Pixel des zweiten verpixelten Strahls vom Typ Abblendlicht (LB) im Bereich der Projektionszone (ZP) zu verringern.

8. Leuchtvorrichtung (1) nach einem der vorhergehenden Ansprüche, wobei das erste Leuchtmodul (2) eine monolithische Matrix von Elektrolumineszenzelementen (21) aufweist.

9. Leuchtsystem für ein Kraftfahrzeug, wobei das System eine Leuchtvorrichtung (1) nach einem der vorhergehenden Ansprüche und eine Erkennungsvorrichtung einer Kurve aufweist, die dazu bestimmt ist, vom Kraftfahrzeug durchfahren zu werden, wobei die Steuereinheit (4) der Leuchtvorrichtung eingerichtet ist, um Informationen von der Kurvenerkennungsvorrichtung zu empfangen, und um die Pixel der von den Leuchtmodulen (2, 3) der Leuchtvorrichtung projizierten Strahlen (HR, LB) abhängig von den Informationen zu steuern.

10. Leuchtsystem nach dem vorhergehenden Anspruch, **dadurch gekennzeichnet, dass** es eine Vorrichtung zur Erkennung von Verkehrsbedingungen des Fahrzeugs und/oder zum Empfang von Informationen bezüglich der Verkehrsbedingungen des Fahrzeugs aufweist, und dass die Steuereinheit (4) eingerichtet ist, um Informationen bezüglich dieser Verkehrsbedingungen von der Erkennungs- und/oder Empfangsvorrichtung zu empfangen und um die Vielzahl von Pixeln (HRM) der ersten und zweiten Strahlen (HR, LB) selektiv zu steuern, um ein Muster in den globalen Strahl (LBG) bezüglich der Verkehrsbedingungen zu projizieren.

## Claims

1. Light device (1) for a motor vehicle, comprising a first light module (2) adapted to project a pixelized first beam (HR) with a first resolution and a second light module (3) adapted to project a pixelized low beam type second beam (LB) with a second resolution, the second beams presenting an upper cut-off line of the low-beam type, the first and second light modules being disposed in a way that the first and second beams overlap vertically at least in part to form a global beam (LBG), the overlap of the first and second pixelated beams (HR, LB) defines a matrix projection area (ZP) formed by the overlap of a plurality of pixels of the first and second pixelated beams,
the device comprising a control unit (4) able to control selectively a plurality of pixels (HRM) of the first and second beams so as to project a motif in the global beam,
the pattern being defined by a dot matrix and the control unit (4) being arranged to selectively controlling the light intensity of a plurality (HRM) of pixels of the first and second beams (HR,LB) located in the projection area (ZP) so as to generate a contrast in each pixel pair between the pixel of the first beam (HR) and the pixel of the second beam (LB) of that plurality of overlapping pixels, each contrast corresponding to a point in said point matrix; and
- when the motor vehicle approaches a turn:
∘ the control unit is arranged to selectively control the light intensity of said plurality of pixels (HRM) of the first and second beams (HR,LB) located in the projection area (ZP) so as to move each contrast in of a pair of pixels of said plurality of overlapping pixels to another pair of pixels of said plurality of overlapping pixels so as to create a shift of said pattern in the global beam in the direction of the turn;
the lighting device being **characterized in that**:
- the second resolution is lower than the first resolution, and
- the control unit (4) is arranged to control the pixels of the first beam (HR) and/or the second beam (LB) when the motor vehicle approaches a turn to move a portion of an upper cut-off of the global beam towards the turn.

2. The light device (1) according to the preceding claim, wherein the first and second light modules (2,3) are arranged such that:
- the pixelized first beam (HR) includes a number of pixels greater than the number of pixel of the pixelized low beam type second beam (LB); and/or
- each pixel of the pixelized first beam has a width and/or a length strictly less than the minimum width and/or the minimum length respectively of the pixels of the pixelized low beam type second beam;
- the pixelized first beam has a horizontal amplitude less than the horizontal amplitude of the pixelized low beam type second beam.

3. The light device (1) according to the preceding claim, wherein the first and second light modules (2,3) are such that the first and second beams (HR,LB) overlap so that the pixelized first beam extends in the global beam (LBG) exclusively below the upper cut-off (LB_CO) of the pixelized low beam type second beam.

4. The light device (1) according to either one of claims 1 or 2, wherein the first and second light modules (2,3) are such that the first and second beams (HR,LB) overlap so that the pixelized first beam extends in the global beam (LBG) above and below the upper cut-off (LB_CO) of the pixelized low beam type second beam.

5. The light device (1) according to any one of the preceding claims, wherein the part of the pixelized first beam (HR) extending above the pixelized low beam type second beam (LB) produces a portion of a low-beam type cut-off line intended to be associated at the upper cut-off line of the second beam and in which said portion is moved when the vehicle enters in the direction of the bend.

6. The light device (1) according to any one of the preceding claims, wherein the second light module (3) is such that the pixelized low beam type second beam (LB) extends horizontally and substantially symmetrically on respective opposite sides of a vertical axis (V-V) and the first light module (2) is such that the pixelized first beam (HR) extends horizontally and substantially asymmetrically on respective opposite sides of that vertical axis.

7. The light device (1) according to any one of the preceding claims, wherein the control unit (4) is adapted to reduce the luminous intensity of all the pixels of the pixelized low beam type second beam (LB) at the level of said projection zone (ZP).

8. The light device (1) according to any one of the preceding claims, wherein the first light module (2) includes a matrix of monolithic electroluminescent elements (21).

9. The light system for a motor vehicle, the system including a light device (1) according to any one of the preceding claims and a device for detection of a turn intended to be taken by the motor vehicle, the control unit (4) of the light device being adapted to receive information from said turn detection device and to control the pixels of the beams (HR,LB) projected by the light modules (2,3) of the light device as a function of said information.

10. The lighting system according to the preceding claim, **characterized in that** it includes a device for detection of traffic conditions of the vehicle and/or for reception of information relating to the traffic conditions of the vehicle, and **in that** the control unit (4) is adapted to receive information relating to those traffic conditions from said detection and/or reception device and to control selectively said plurality of pixels (HRM) of the first and second beams (HR,LB) so as to project a motif in the global beam (LBG) concerning said traffic conditions.
